# EUROPEAN PATENT APPLICATION

(11) **EP 4 583 584 A1**
(43) Date of publication of application: **09.07.2025**
(21) Application number: 23859713.2
(22) Date of filing: 28.04.2023
(51) Int. Cl.: H04W 36/30, H04W 36/36, H04W 4/42, H04W 72/0453

(54) **WIRELESS COMMUNICATION SYSTEM AND METHOD THEREFOR**

(30) Priority: 29.08.2022 JP 2022135883
(71) Applicant: Hitachi, Ltd., Tokyo 100-8280 (JP)
(72) Inventor: FUJISHIMA, Kenzaburo, Tokyo 100-8280 (JP); OOMI, Taishi, Tokyo 100-8280 (JP)
(74) Representative: MERH-IP Matias Erny Reichl Hoffmann Patentanwälte PartG mbB
(86) International application number: PCT/JP2023/016936
(87) International publication number: WO 2024/047942

(57) **Abstract**

A wireless communication system including a plurality of ground stations that communicate with a mobile station, in which the mobile station constantly measures communication quality of radio wave transmitted from the peripheral ground stations, selects a plurality of handover candidate ground stations based on the measurement result, reserves a wireless resource for reserving a wireless communication channel with respect to each of the plurality of selected handover candidate ground stations, and hands over one ground station among the ground stations for which the wireless resource is reserved based on comparison between the communication quality of the radio wave transmitted from the ground station reserved by the mobile station for the wireless resource and the communication quality of the radio wave transmitted from the ground station with which the mobile station is in communication. The wireless resource reservation is performed every time the selection of handover candidate ground stations at the mobile station changes without limitation on the number of times before performing handover.

## Description

### Technical Field

The present invention relates to a wireless communication system and a method thereof.

### Background Art

A wireless communication system for a mobile body needs to secure a wireless coverage for covering a range in which a wireless station (mobile station) included in the mobile body moves. If the wireless coverage is too large for one base station to cover, the mobile station requires handover control to switch a base station to communicate with depending on its location.

Various handover methods have been proposed and put into practice. For example, there are methods of determining whether or not to implement the handover based on comparison of radio wave power received at the mobile station from base stations, and determining it depending on the location of the mobile station.

Patent Literature discloses a technology of determining a handover timing based on comparison between wireless line quality of the base station before handover and wireless line quality of the base station after handover. Also disclosed is a technology of improving reachability of a relevant packet, after determining the handover timing, by the base station before handover and the base station after handover transmitting the same packets to the relevant mobile station for which the handover timing is determined.

### Citation List

### Patent Literature

Patent Literature 1: Japanese Unexamined Patent Application Publication No. 2007-13463

### Summary of Invention

### Technical Problem

There was a problem that, if wireless communication between the mobile station and the base station before handover is interrupted before determining the handover timing, communication continuity between the mobile station and the base station is lost until the mobile station reestablishes a wireless communication path with any base station. The present invention has been made in view of the above problem, and aims to provide a wireless communication system that achieves highly reliable handover for a mobile body.

### Solution to Problem

The present invention that solves the above problem provides a wireless communication system including a plurality of ground stations that communicate with a mobile station, in which the mobile station constantly measures communication quality of radio wave transmitted from the peripheral ground stations, selects a plurality of handover candidate ground stations based on the measurement result, reserves a wireless resource for reserving a wireless communication channel with respect to each of the plurality of selected handover candidate ground stations, and hands over one ground station among the ground stations for which the wireless resource is reserved based on comparison between the communication quality of the radio wave transmitted from the ground station reserved by the mobile station for the wireless resource and the communication quality of the radio wave transmitted from the ground station with which the mobile station is in communication.

### Advantageous Effects of Invention

According to the present invention, it is possible to provide a wireless communication system that achieves highly reliable handover for a mobile body.

### Brief Description of Drawings

Fig. 1 is a functional block diagram showing a schematic configuration of a wireless communication system according to an embodiment of the present invention (hereinbelow, referred to as "the present wireless communication system").
Fig. 2 is a table showing time displacement with respect to each wireless channel by the present wireless communication system shown in Fig. 1.
Fig. 3 is a table showing frequency allocation with respect to each base station by the present wireless communication system shown in Fig. 1.
Fig. 4 is a table showing a wireless channel allocation table with respect to each of the base stations by the present wireless communication system shown in Fig. 1.
Fig. 5 is a conceptual diagram showing wireless signals transferred in the wireless channel by the present wireless communication system shown in Fig. 1.
Fig. 6 is a flowchart showing a procedure of resource reservation of allocating a wireless channel to each mobile station by the present wireless communication system shown in Fig. 1.
Fig. 7 is a flowchart showing a procedure of handover by the present wireless communication system shown in Fig. 1. Description of Embodiments

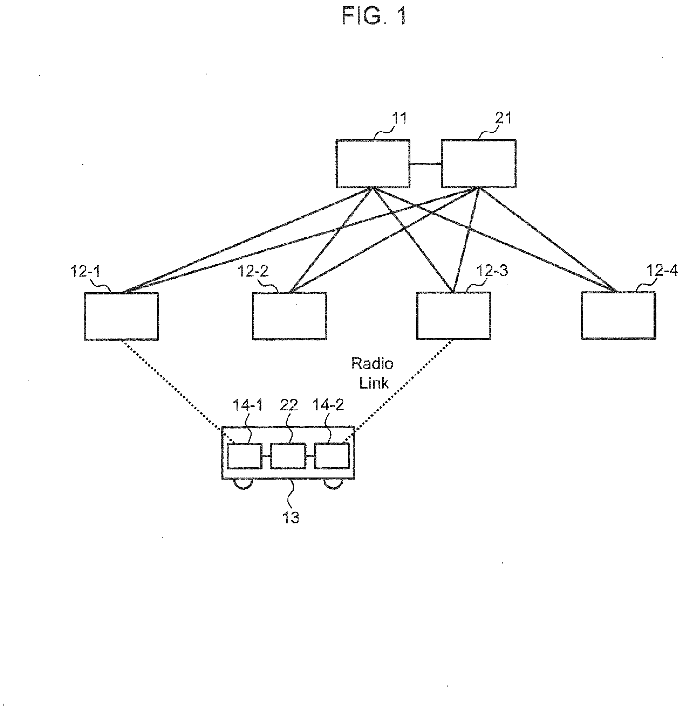

Fig. 1 is a functional block diagram showing a schematic configuration of a wireless communication system. As shown in Fig. 1, the internal of the wireless system is constituted by a ground wireless control device 11, a plurality of base stations 12-1 to 12-4, a mobile body 13 such as a train, a mobile station 14 loaded on the mobile body 13, a data transfer device 21 on the ground side, and a data transfer device 22 on the mobile body side.

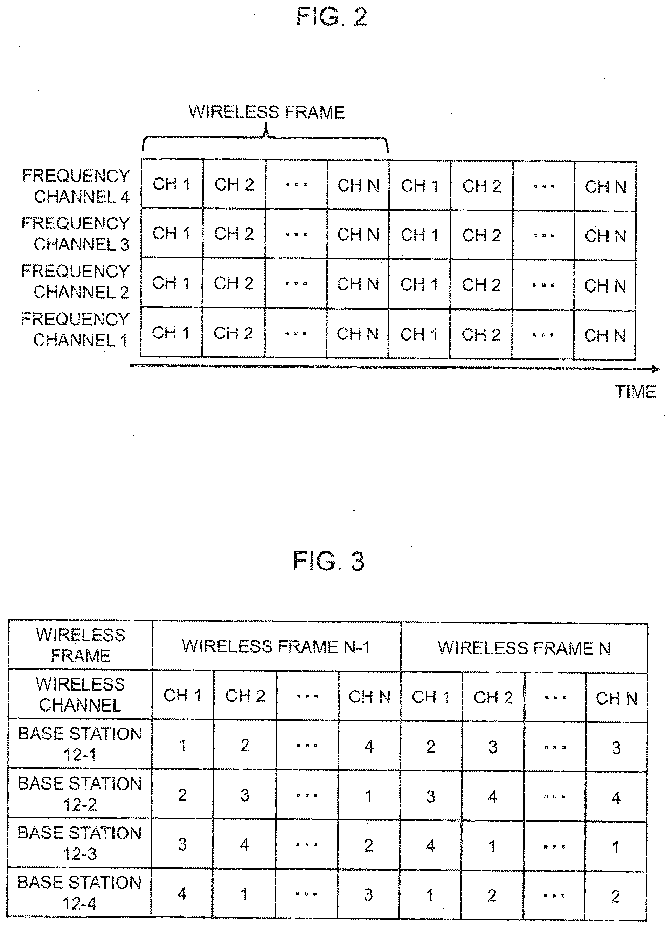

Although the present wireless communication system illustrates four base stations 12-1 to 12-4, two mobile stations 14-1 to 14-2, and four lines of wireless channels CH1 to CHN, these numbers of the wireless stations and the CHs are not limited thereto. It should be noted that, when there is no need of distinguishing a plurality of items of the same type, they are collectively denoted by a base station 12, a mobile station 14, a wireless channel CH (Figs. 2 to 4), or no symbol.

The ground wireless control device 11 unifies management of the wireless channels CH1 to CHN included in all the base stations 12 in the wireless system, and has a function of allocating the wireless channel CH to each mobile station 14. Moreover, The ground wireless control device 11 also has a function of routing for controlling a packet transmitted by the data transfer device 21 on the ground side about via which base station 12 to be transmitted (routing/route selection/route control).

The base station 12 has a function of arranging a packet that the ground side data transfer device 21 transfers to the mobile body side data transfer device 22 on the wireless channel and transmitting it as a wireless signal. Moreover, the base station 12 has a function of converting the wireless signal transmitted by the mobile station 14 into a packet and transmitting it to the ground side data transfer device 21. Furthermore, the base station 12 has a function of transmitting and receiving a reference signal and a header signal.

The mobile station 14 has a function of arranging a packet that the mobile body side data transfer device 22 transfers to the ground side data transfer device 21 and transmitting it as the wireless signal. Moreover, the mobile station 14 has a function of converting the wireless signal transmitted by the base station 12 into a packet and transmitting it to the mobile body side data transfer device 22. Furthermore, the mobile station 14 has a function of transmitting and receiving the reference signal and the header signal. The ground side data transfer device 21 and the mobile body side data transfer device 22 have a function of mutually transmitting and receiving a data packet.

Fig. 2 is a table showing time displacement with respect to each wireless channel by the present wireless communication system shown in Fig. 1. As shown in Fig. 2, in the entire wireless system, N pieces of time-divided wireless channels CH are defined, and a mass of N wireless channels is defined as a wireless frame.

In Fig. 2, four frequency channels 1 to 4 are defined in a frequency direction, that is, in a vertical direction of the table. Each base station avoids a radio wave interference between the base stations by using one frequency channel at a certain time point and differing the frequency channel used from that used by a neighboring base station.

Base stations far from each other may use the same frequency channel at a certain time point. Each base station has N time-divided wireless channels CH on one frequency channel. That is, each base station can allocate to the N mobile stations 14 at a maximum a wireless channel CH exclusively available for each one.

Since one wireless channel CH can be used once per wireless frame, wireless data transfer is possible at a wireless frame cycle of 10 ms. Each wireless channel CH shall include a downlink channel for transmission by the base station and an uplink channel for transmission by the mobile station 14.

Fig. 3 is a table showing frequency allocation with respect to each of the base stations 12-1 to 12-4 by the present wireless communication system shown in Fig. 1. The table shown in Fig. 3 shows which frequency channel should be allocated to each wireless frame and each wireless channel CH with respect to each base station. In the present wireless communication system, frequencies used by the base station with respect to each wireless channel CH are changed as indicated by the numbers 1-4 in the table, and frequency hopping (Frequency Hopping Spread Spectrum) is applied.

The frequency hopping is a communication method that avoids continuous overlaps and radio interference even if the frequency instantaneously overlaps that of another communication by communicating while quickly changing the frequency. However, in the present wireless communication system, the frequency hopping is not an essential element, and the frequency channel may be allocated so as not to change temporally with respect to each base station. The reason why the frequency hopping is required for the present wireless communication system is to avoid the radio wave interference with the frequency used for Wi-Fi (R) or the like, which is close to the frequency used for the present wireless communication system.

For the channel allocation with respect to each wireless frame shown in Fig. 3, the base station may have a self-running counter for a wireless frame number and a wireless channel CH number as a protocol capable of deriving the frequency channel from the wireless frame number and the wireless channel CH number by calculation, and determine the frequency channel based on the calculation formula. Alternatively, the wireless channel CH initially set at the time of starting up the base station may be allocated.

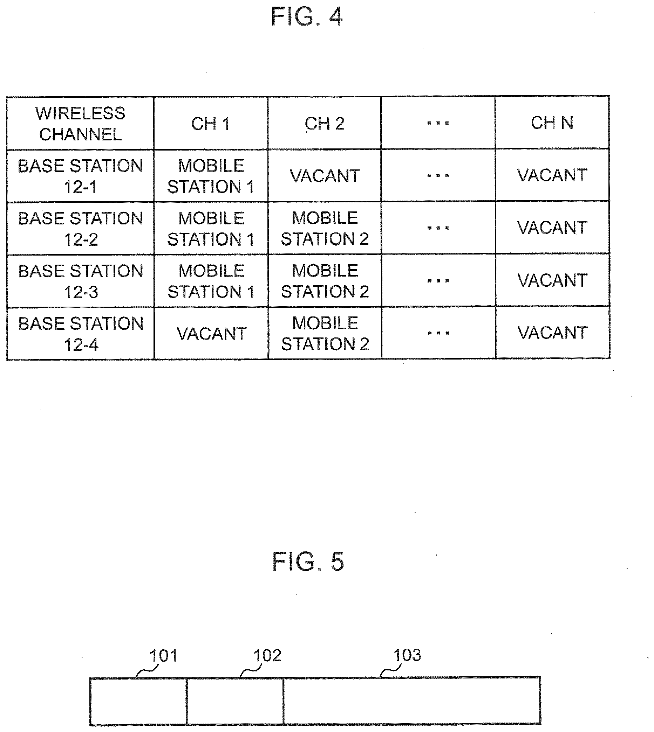

Fig. 4 is a table showing a wireless channel allocation table with respect to each of the base stations 12-1 to 12-4 by the present wireless communication system shown in Fig. 1. More particularly, it is a table for the ground wireless control device 11 in the present wireless communication system to manage the respective wireless channels for each of the base stations 12-1 to 12-4. The ground wireless control device 11 manages which mobile station each wireless channel CH for all the base station 12 is allocated.

An example management in Fig. 4 is as follows. The mobile station 1 is allocated with a wireless channel CH1 for a base station 12-1, a base station 12-2, and a base station 12-3. The mobile station 2 is allocated with a wireless channel CH2 for the base station 12-2, the base station 12-3, and the base station 12-4. Other wireless channels CH indicate they are in a vacant state meaning that they are not allocated to any mobile station.

Moreover, the ground wireless control device 11 indicates to the ground side data transfer device 21 which base station to input the data packet addressed to each mobile station based on the wireless channel allocation table in Fig. 4. The ground wireless control device 11 also indicates to each base station on which wireless channel and the data packet addressed to which mobile station to transmit. The ground wireless control device 11 also indicates on which wireless channel and the data packet from which mobile station to receive.

The ground wireless control device 11 updates the content of the table based on the list of handover candidate base stations reported from each mobile station. For example, if the base station 12-2, the base station 12-3, and the base station 12-4 are reported from the mobile station 1 allocated with the wireless channel CH1 for the base station 12-1, the base station 12-2, and the base station 12-3 as the list of the handover candidate base stations, the ground wireless control device 11 releases the channel allocation of the wireless channel CH1 for the base station 12-1 to enter the vacant state.

Moreover, the ground wireless control device 11 retains the channel allocation of the wireless channel CH1 for the base station 12-2 and the base station 12-3. Furthermore, the ground wireless control device 11 also allocates any wireless channel CH that is a vacant channel among the wireless channel for the base station 12-4 to the mobile station 1. A part of the wireless channel allocated to the mobile station 1 for the base station 12-4 is updated from vacant to the mobile station 1.

Fig. 5 is a conceptual diagram showing wireless signals transferred in the wireless channel by the present wireless communication system shown in Fig. 1. The wireless signal transferred in each wireless channel CH is constituted by a reference signal 101, a header signal 102, and a payload signal 103. The reference signal 101 corresponds to a preamble or the like for detecting a head of the wireless signal on the receiving side of the wireless signal. The header signal 102 stores therein at least wireless control information for identifying a transmitter of the reference signal 101. The payload signal 103 is a signal of the data packet converted into a wireless signal.

The reference signal 101 is a signal already known to all the base stations and the mobile stations, and initially set to all the base stations and the mobile stations. At least for the mobile station to distinguish between the reference signal transmitted by the base station and the reference signal transmitted by the mobile station, the base station-transmitted reference signal and the mobile station-transmitted reference signal are desirably in a system with a low cross-correlation. However, with a protocol capable of distinguishing between the base station and the mobile station by an identifier of a transmitter included in the header signal, a single reference signal may be shared.

The reference signal 101 has a function of detecting a head timing of the wireless signal and a function of estimating received power of the reference signal. By performing a sliding correlation operation between a received signal and a known reference signal on the receiving side of the reference signal, the timing with the highest correlation value is determined to be a receiving timing, and the received power of the wireless signal is estimated from the correlation value of the timing.

The header signal 102 is generated as a wireless signal by modulating a bit string of the wireless control information using a modulation scheme such as error detection, error correction coding, rate matching, scrambling, QPSK, and OFDM. In the present wireless communication system, the least information to be included in the wireless control information is an identifier of the base station or the mobile station of the transmitter.

The transmitter of the reference signal 101 and the header signal 102 can be identified on the receiving side by retrieving the bit string of the wireless control information by the decoding, error correction, and error detection process on the header signal 102 after identifying the receiving timing of the wireless signal based on the reference signal 101 on the receiving side, and retrieving the identifier of the base station or the mobile station included in the bit string.

Since the mobile station measures radio wave intensity of the wireless signal transmitted from the base station in the present wireless communication system, the reference signal 101 and the header signal 102 are constantly output on all the downlink wireless channels for each base station. The payload signal 103 does not need to transmit anything if there is no information to be transferred.

The payload signal 103 is generated as a wireless signal by modulating a bit string constituting the data packet using various modulation schemes. The bit string constituting the data packet is transferred between the ground side data transfer device and the mobile station side data transfer device.

The modulation scheme that generates the bit string as a modulated wireless signal depends on such a scheme as error detection, error correction coding, rate matching, scrambling, QPSK, or OFDM. It should be noted that, if there is no data packet to be transmitted in the present wireless communication system, it is desirable not to transmit anything in terms of reduction in the radio wave interference between the base stations and reduction in the power consumption in the base station.

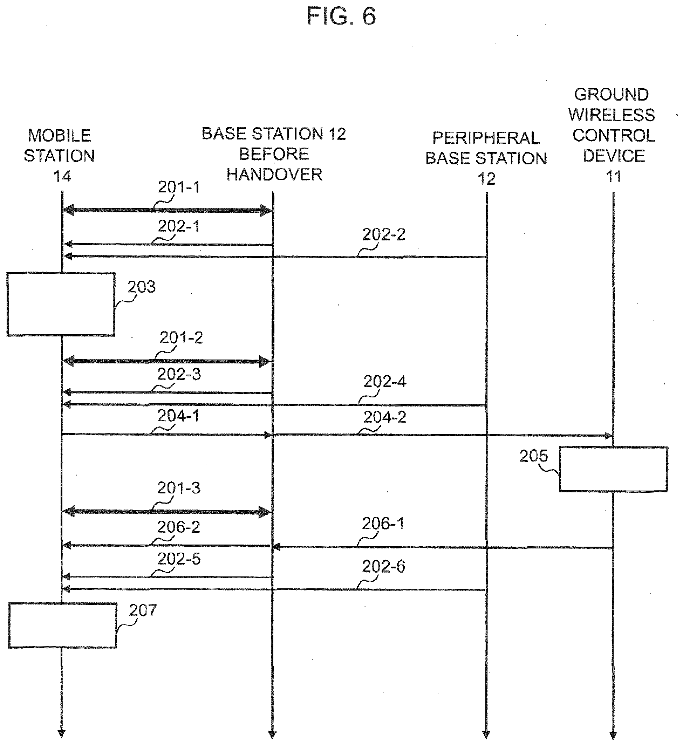

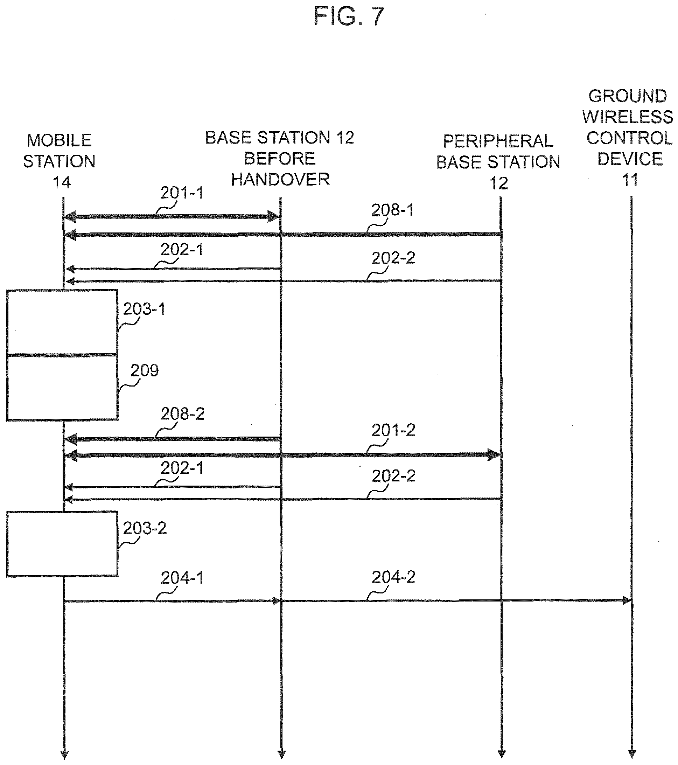

Fig. 6 is a flowchart showing a procedure of resource reservation of allocating a wireless channel to each mobile station by the present wireless communication system shown in Fig. 1. As shown in Fig. 7, the mobile station is allocated with the wireless channel CH for the base station before handover, and performs bidirectional communication between the mobile station and the base station on the relevant allocated wireless channel (201-1).

The base station before handover and other base stations around the base station before handover constantly communicate the reference signal and the header signal on all the downlink wireless channels (202). The header signal includes an identifier of the base station that is the transmitter thereof.

The mobile station measures the received power of the reference signal at the base station before handover and the peripheral base station. Since each base station uses a different frequency as shown in Fig. 3, it is possible to estimate the received power of reference signals transmitted by a plurality of base stations by switching time or frequency for observing the reference signals at the mobile station. Based on the measurement result, the mobile station lists, for example, three base stations in the descending order of intensity of the radio wave received power (203).

Afterwards, the bidirectional communication (201) on the allocated channel with respect to each wireless frame as well as transmission of the downlink reference signal and the header signal (202) are repeated. The mobile station transmits the list of the base station identifiers generated at 203 to the ground wireless control device via the base station in communication (204). The information at 204 may be included in the uplink communication in 201 or may be transmitted with a wireless channel CH other than 201 being allocated thereto.

The ground wireless control device updates the allocation of the wireless channel to the relevant mobile station as described with reference to Fig. 4, based on the listing of the base station identifiers at 204 (205). For the ground wireless control device, the relevant mobile station transmits the allocation result of the wireless channel to the relevant mobile station, that is, a combination of the identifier of the base station and the wireless channel CH number, to the mobile station via the base station in communication as wireless channel allocation information for the number of the base stations to which the wireless channel CH is allocated (206).

The information at 206 may be included as a part of downlink communication information about the bidirectional communication at 201, or may be notified with a wireless channel CH other than that of 201 being defined. Upon receiving the information at 206, the mobile station updates information about which wireless channel CH for which base station is allocated in the mobile station (207).

Fig. 7 is a flowchart showing a procedure of handover by the present wireless communication system shown in Fig. 1. As shown in Fig. 7, the mobile station is allocated with the wireless channel CH at the base station before handover, and bidirectional communication is performed between the mobile station and the base station on the relevant allocated wireless channel (201-1).

The base station before handover and other base stations around the base station before handover constantly communicate the reference signal and the header signal on all the downlink wireless channels (202). The header signal includes an identifier of the base station that is the transmitter thereof.

The peripheral base station different from the base station before handover to which the wireless channel CH is already allocated in Fig. 6 transmits a downlink payload signal for the relevant mobile station (208). This downlink payload signal for transmission is the same as that of the base station before handover. The mobile station receives the payload signal of the base station before handover, and may or may not receive the payload signal of the peripheral base station.

When the mobile station receives the same payload signals from a plurality of base stations, the mobile station receives any one of the payload signals and destroys other payload signals due to the same content. By including a sequence number in the payload signal and checking the sequence number included in each payload signal at the mobile station, when the sequence number already received at the mobile station is detected again, it is possible to determine it as the same payload signal and destroy the payload signal.

As with Fig. 6, the mobile station generates a list of handover candidate base stations based on 202 (203). The mobile station determines execution of handover at a timing when, for example, the received power of the reference signal of the handover candidate base station exceeds the received power of the reference signal of the base station before handover, based on comparison of the received power of the reference signals from the handover candidate base station to which the wireless channel is already allocated in Fig. 6 and the base station before handover (209).

After determining execution of handover, the mobile station changes a counterpart of the bidirectional communication from the base station before handover to the peripheral base station that was the handover candidate base station (201). The base station before handover continues to transmit the downlink payload signal since the wireless channel CH is still allocated to the relevant mobile station (208). However, since execution of handover has been determined, the mobile station may or may not receive the downlink payload signal from the base station before handover.

That is, since the process of switching the base station as the counterpart of the bidirectional communication after 209 is handover and the base station before handover still remains as the handover candidate base station at the time point, the downlink payload signal continues to be transmitted. Subsequently, as with Fig. 6, measurement of the received power of the downlink reference signal (202), listing of the handover candidate base stations based on the measurement result (203), and transmission of the list to the ground wireless control device (204) are performed.

The present wireless communication system can be summarized as follows.
[1] The present wireless communication system includes a plurality of ground stations 12 in wireless communication with the mobile station 14. In the present wireless communication system, the mobile station 14 measures communication quality of radio wave constantly transmitted from the peripheral ground stations 12, selects a plurality of handover candidate ground stations 12 based on the measurement result, and reserves a wireless resource for each of the plurality of handover candidate ground stations 12 so as to reserve an appropriate wireless communication channel CH.

The present wireless communication system hands over one ground station among the ground stations for which the wireless resource is reserved based on comparison between communication quality of the radio wave transmitted from the ground station 12 by the mobile station 14 for the wireless resource reserved and communication quality of the radio wave transmitted from the ground station 12 in communication with the relevant mobile station 14. In such a present wireless communication system, the mobile station 14 is constantly allocated with the wireless channel CH associated with a plurality of base stations 12 with relatively large radio wave received power.

The mobile station 14 may preferably determine to which ground station 12 to hand over and whether to execute it or not based on the result of comparing the communication quality of the radio wave transmitted from the ground station 12 between the ground station 12 currently in communication and the handover candidate ground station 12. In such a case, the mobile station 14 starts to transmit the reference signal 101, the header signal 102, and the payload signal 103 to the ground station 12 to be handed over to using the wireless channel CH with the resource reserved for the relevant ground station 12.

According to such a present wireless communication system, it is possible for the mobile station 14 to perform handover at the optimal timing convenient for itself. Even if the base station 12 to be handed over to fails, communication can be retained by handing over to another healthy ground station 12 based on determination by the mobile station 14 itself.

Therefore, even if communication with the base station 12 before handover is interrupted at a timing before performing handover in the present wireless communication system, communication continuity can be retained between the mobile station 14 and the base station 12 because the wireless channel CH for another base station 12 has already been allocated. In this manner, according to the present wireless communication system, it is possible to achieve highly reliable handover for the mobile body 13.

[2] The present wireless communication system described in the above [1] may preferably perform wireless resource reservation every time the selection of handover candidate ground station at the mobile station 14 changes without limitation on the number of times before performing handover. In this connection, a situation is illustrated in which the ground stations 12 are arranged at intervals of 500 m to 1 km along a railway line to which the present wireless communication system is applied, and handover is performed once while a train being the mobile body 13 passes between them in 30 seconds.

Here, if the wireless resource reservation continues as often as once in 300 milliseconds, then the mobile station 14 loaded on the mobile body 13 should be able to reserve a wireless resource about 100 times for one handover. Accordingly, the present wireless communication system allows for handover following a change without delay.

According to such a present wireless communication system, as seen from the mobile station 14, even if a change occurs to the combination of base stations 12 with high received radio wave intensity, the wireless resource reservation is updated following the combination change, which allows for avoiding degradation in communication quality of the allocated wireless channel due to obsolescence of the wireless resource reservation.

[3] The present wireless communication system described in the above [1] or [2] may preferably perform communication between the ground stations 12 and the mobile station 14 on a plurality of appropriately switchable wireless channels. That is, as shown in Fig. 3, the present wireless communication system may preferably apply frequency hopping in which the frequencies used by the base stations are changed with respect to each wireless channel CH as indicated by the numbers 1 to 4 in the table. According to such a present wireless communication system, even if the frequency used by the base station is close to the frequency used for Wi-Fi (R) or the like, it is easy to avoid the radio wave interference therewith, thereby reducing nuisance to the surroundings.

Moreover, transferred on each wireless channel of the present wireless communication system are the reference signal 101 known to the receiving side, the header signal 102 referenced for the wireless signal receiving control, and the payload signal 103 for transferring information between the ground stations 12 and the mobile station 14.

The reference signal 101 has a function of detecting a head timing of the wireless signal and a function of estimating received power of the reference signal. By performing a sliding correlation operation between a received signal and a known reference signal on the receiving side of the reference signal, the timing with the highest correlation value is determined to be a receiving timing, and the received power of the wireless signal is estimated from the correlation value of the timing.

In this communication state, the mobile station 14 may preferably estimate communication quality of the known reference signal 101. In this manner, the reference signal 101 is required for the mobile station 14 to measure the received radio wave intensity transmitted from each base station 12. In other words, the mobile station 14 can measure the received radio wave intensity transmitted from each base station 12 by the fact that the reference signal 101 can be provided.

[4] In the present wireless communication system described in the above [3], the header signal 102 may preferably include an identifier of the ground station 12 so that the mobile station 14 can identify the transmitter of the known reference signal 101. According to this, even if there is no payload signal 103, it is possible to identify the base station 12 that is the transmitter of the reference signal 101 if there is the header signal 102. As a result, the present wireless communication system can suppress an output of unnecessary payload signal 103, thereby contributing to reduction in the radio wave interference and reduction in the power consumption in the base station 12.

[5] In the present wireless communication system described in the above [3], the ground station 12 may preferably constantly output the reference signal 101 and the header signal 102 for measurement of the radio wave received power, no matter there is information to be transmitted as the payload signal 103 or not.

According to such a present wireless communication system, since the mobile station 14 can measure the received power of the radio wave constantly transmitted from the base station in communication and the peripheral base station 12, it is possible to optimally operate as occasion may demand based on the measurement result. As a result, the present wireless communication system can prevent obsolescence of the wireless resource reservation caused by inability of measuring the radio wave received power.

[6] In the present wireless communication system described in the above [3], the mobile station 14 may preferably store a list of identifiers of the handover candidate ground stations 12 in a part of the header signal 102 or the payload signal 103 and transmits the list to the ground station 12.

In such a case, the ground station 12 transmits information for indicating to a part of the header signal 102 or the payload signal 103, at each of the handover candidate ground stations 12, the wireless channel CH allocated to the relevant mobile station 12 to the mobile station 14 as wireless resource reservation information. According to such a present wireless communication system, it is possible to transfer the wireless control information regarding the wireless resource reservation from the mobile station 14 to the base station 12.

In other words, by setting in a part of the header signal 102 or the payload signal 103 in advance a dedicated frame for storing "information such as which base station 12 currently has a strong radio wave," it is possible to make handover smoother without scarifying information transfer. That is, in return for achievement of the purpose of the present invention to make handover smoother, it is possible to avoid mistaking the means for the end like thinning down communication information.

[7] In the above [6], by assuming that the allocation of the wireless channel in which the mobile station 14 exists in the past wireless resource reservation information and not in the latest wireless resource reservation information has been destroyed, the process can be simplified.

According to such a present wireless communication system, regarding the base station 12 excluded from handover candidates, it is possible to implicitly release the wireless resource reservation on the base station 12 side without explicitly indicating by the mobile station 14 that it is excluded from the handover candidates. As a result, the present wireless communication system can suppress the radio wave output because there is no need for extra control information transfer required for reserving the wireless resource.

[8] In the present wireless communication system described in the above [6], the ground wireless control device 11 may preferably control each section as following. The ground station 12 integrates list information of the identifiers of the handover candidate ground stations 12 received from the mobile station 14 into the ground wireless control device 11 that presides a plurality of ground stations 12. Then, the ground wireless control device 11 manages the allocation states of the wireless channels for all the ground stations 12. The ground wireless control device 11 determines the allocation state at the time point of inputting the list information and the wireless channel CH that can be allocated to the mobile station 14 based on the input information, and outputs the determined information to the ground station 12.

According to such a present wireless communication system, a device is achieved that integrates a wireless resource reservation function. More specifically, there is no need of such negotiation as making a logical decision by each base station 12 intercommunicating directly with another base station 12 for resource reservation. As a result, the present wireless communication system can simplify an operational logic of the base station 12. That is, because a computer program for executing the applicable processing is simplified, the corresponding section can be formed even with a one-chip microcomputer or the like.

[9] In the present wireless communication system described in the above [3], a plurality of ground stations 12 allocated with a wireless channel CH for one mobile station 14 may preferably transfer the same packets for the relevant mobile stations 14 in parallel to the relevant mobile stations 14 as the payload signals 103 on the allocated wireless channel. In that case, each ground station 12 of the relevant plurality of ground stations 12 shall attempt to receive the payload signal 103 transmitted from the relevant mobile station 14 on the allocated wireless channel.

Such a present wireless communication system transfers the same packets for a mobile station 14 from a plurality of base stations 12 in parallel, and attempts to receive the packet transmitted from the mobile station 14. As a result, even if some base station 12-n (not shown) among the plurality of base stations 12-1 to 12-4 fails, the present wireless communication system can retain communication between the remaining healthy base stations 12 reserved as the wireless resource and the mobile station 14. In other words, "the effect of the wireless resource reservation" aimed in the present invention is demonstrated.

The present method can be summarized as follows.
[11] The present wireless communication method is a wireless communication method in which a plurality of ground stations 12 and a mobile station 14 communicate wirelessly while performing handover. The ground wireless control device 11 performs handover in the following procedure.

First, the ground wireless control device 11 causes the mobile station 14 to measure communication quality of the radio wave constantly transmitted from the peripheral ground station 12. The ground wireless control device 11 selects a plurality of handover candidate ground stations 12 based on the measurement result. The ground wireless control device 11 reserves a wireless resource so as to cause respective ones of the plurality of selected handover candidate ground stations 12 to reserve the adapted wireless communication channel CH.

The ground wireless control device 11 hands over one ground station 12 among the ground station 12 for which the wireless resource is reserved based on a comparison result between the communication quality of the radio wave transmitted from the ground station 12 by the mobile station 14 for the wireless resource reserved and the communication quality of the radio wave transmitted from the ground station 12 in communication with the mobile station 14.

According to the present method, because the mobile station 14 is constantly allocated with the wireless channel CH associated with a plurality of base stations 12 with relatively large radio wave received power, even if communication with the base station before handover is interrupted at a timing before performing handover, communication continuity can be retained between the mobile station 14 and the base station 12. In this manner, according to the present method, it is possible to achieve highly reliable handover for the mobile body 13.

### List of Reference Signs

1 to 4: frequency channel, 11: ground wireless control device, 12: base station, 13: mobile body, 14: mobile station, 21: ground side data transfer device, 22: mobile body side data transfer device, 101: reference signal, 102: header signal, 103: payload signal

## Claims

1. A wireless communication system including a plurality of ground stations that communicate with a mobile station,
wherein the mobile station:
constantly measures communication quality of a radio wave transmitted from a peripheral ground station;
selects a plurality of handover candidate ground stations based on the measurement result;
reserves a wireless resource for reserving a wireless communication channel with respect to each of the plurality of selected handover candidate ground stations; and
based on comparison between the communication quality of the radio wave transmitted from the ground station reserved by the mobile station for the wireless resource and the communication quality of the radio wave transmitted from the ground station with which the mobile station is in communication,
hands over one ground station among the ground stations for which the wireless resource is reserved.

2. The wireless communication system according to claim 1,
wherein the wireless resource reservation is performed every time the selection of handover candidate ground stations at the mobile station changes without limitation on the number of times before performing handover.

3. The wireless communication system according to claim 1 or 2,
wherein there are a plurality of wireless channels between the ground station and the mobile station,
wherein transferred on each wireless channel are a reference signal known to the receiving side, a header signal referenced for the wireless signal receiving control, and a payload signal for transferring information between the ground stations and the mobile station, and
wherein the mobile station estimates communication quality of the known reference signal.

4. The wireless communication system according to claim 3,
wherein an identifier of the ground station is included in the header signal to cause the mobile station to identify a transmitter of the known reference signal.

5. The wireless communication system according to claim 3,
wherein the ground station constantly outputs the reference signal and the header signal, no matter there is information to be transmitted as the payload signal or not.

6. The wireless communication system according to claim 3,
wherein the mobile station stores a list of identifiers of the handover candidate ground stations in a part of the header signal or the payload signal and transmits the list to the ground station, and the ground station stores, in the part of the header signal or the payload signal, information for indicating, at each of handover candidate ground stations, the wireless channel allocated to the relevant mobile station as wireless resource reservation information and transmits the information to the mobile station.

7. The wireless communication system according to claim 6,
wherein allocation of the wireless channel in which the mobile station exists in past wireless resource reservation information and not in the latest wireless resource reservation information is assumed to have been destroyed.

8. The wireless communication system according to claim 6,
wherein the ground station integrates list information of the identifiers of the handover candidate ground station received from the mobile station into the ground wireless control device that presides a plurality of ground stations, the ground wireless control device manages an allocation state of the wireless channels for all the ground stations, and the ground wireless control device determines the allocation state at the time point of inputting the list information and the wireless channel that can be allocated to the relevant mobile station based on the input information, and outputs the determined information to the ground station.

9. The wireless communication system according to claim 3,
wherein a plurality of ground stations allocated with a wireless channel for one mobile station transfers the same packets for the relevant mobile stations in parallel to the relevant mobile station as the payload signals on the allocated wireless channel, and attempts to receive the payload signal transmitted from the relevant mobile station on the allocated wireless channel.

10. A wireless communication method in which a plurality of ground stations and a mobile station communicate wirelessly while performing handover,
wherein the mobile station:
constantly measures communication quality of a radio wave transmitted from a peripheral ground station;
selects a plurality of handover candidate ground stations based on the measurement result;
reserves a wireless resource for reserving a wireless communication channel with respect to each of the plurality of selected handover candidate ground stations; and
based on comparison between the communication quality of the radio wave transmitted from the ground station reserved by the mobile station for the wireless resource and the communication quality of the radio wave transmitted from the ground station with which the mobile station is in communication,
hands over one ground station among the ground stations for which the wireless resource is reserved.
